# EUROPÄISCHE PATENTSCHRIFT

(11) **EP 4 341 140 B1**
(45) Veröffentlichungstag und Bekanntmachung des Hinweises auf die Patenterteilung: **14.05.2025**
(21) Anmeldenummer: 22710048.4
(22) Anmeldetag: 02.03.2022
(51) Int. Cl.: B60W 30/14, B60W 30/18

(54) **VERFAHREN UND VORRICHTUNG ZUR AKTIVIERUNG EINER ÜBERHOLASSISTENZFUNKTION EINES EINSPURIGEN KRAFTFAHRZEUGS**
METHOD AND DEVICE FOR ACTIVATING AN OVERTAKING ASSISTANCE FUNCTION OF A SINGLE-TRACK MOTOR VEHICLE
PROCÉDÉ ET DISPOSITIF D'ACTIVATION D'UNE FONCTION D'ASSISTANCE DE DÉPASSEMENT D'UN VÉHICULE AUTOMOBILE À VOIE UNIQUE

(30) Priorität: 18.05.2021 DE 102021204998
(43) Veröffentlichungstag der Anmeldung: 27.03.2024
(73) Patentinhaber: Robert Bosch GmbH, 70442 Stuttgart (DE)
(72) Erfinder: VETTER, Daniel, 74354 Besigheim (DE)
(86) Internationale Anmeldenummer: PCT/EP2022/055287
(87) Internationale Veröffentlichungsnummer: WO 2022/242924

(56) Entgegenhaltungen:
- DE-A1- 102010 041 620
- DE-A1- 102019 101 662
- DE-T5- 112018 001 539
- US-A1- 2017 327 114

## Beschreibung

### Stand der Technik

Aus der DE 10 2019 208 484 A1 ist ein Verfahren zur fahrerunabhängigen Einstellung der Längsbeschleunigung eines einspurigen Kraftfahrzeugs bekannt, bei dem- mittels einer Umfeldsensorik das dem einspurigen Kraftfahrzeug vorausfahrende Vorderfahrzeug ermittelt und als Zielobjekt festgelegt wird, mittels derselben oder einer anderen Umfeldsensorik fahrdynamische Daten des Zielobjekts ermittelt werden, abhängig von den fahrdynamischen Daten die Längsbeschleunigung des einspurigen Kraftfahrzeugs eingestellt wird, ermittelt wird, ob das Zielobjekt mittels der Umfeldsensorik noch erfasst wird und für den Fall, dass das Zielobjekt nicht mehr erfasst wird, die Geschwindigkeit des einspurigen Kraftfahrzeugs auf einen vorgegebenen Wert eingestellt wird, wobei die Heranführung der Geschwindigkeit auf den vorgegebenen Wert derart erfolgt, dass ein vorgegebener Beschleunigungsgrenzwert nicht überschritten wird.

Stand der Technik hierzu sind DE 11 2018 001539 T5 und DE 10 2019 101662 A1.

### Offenbarung der Erfindung

Die Erfindung betrifft ein Verfahren zur Aktivierung einer Überholassistenzfunktion eines einspurigen Kraftfahrzeugs mittels eines durch den Fahrer betätigbaren Bedienelements eines Fahrtrichtungsanzeigers, wobei das einspurige Kraftfahrzeug zusätzlich eine Abstands- und/oder Geschwindigkeitsregelungsfunktion aufweist, bei dem
- die Betätigungsdauer des Bedienelements ermittelt wird und
- für den Fall, dass die Betätigungsdauer einen vorgegebenen Schwellenwert überschreitet, Eingriffe der Abstands- und/oder Geschwindigkeitsregelungsfunktion während der fahrerunabhängigen Beschleunigungsphase der Überholassistenzfunktion vorübergehend unterdrückt werden.

Eine vorteilhafte Ausgestaltung der Erfindung ist dadurch gekennzeichnet, dass es sich bei dem Bedienelement um einen Blinkerhebel handelt.

Eine vorteilhafte Ausgestaltung der Erfindung ist dadurch gekennzeichnet, dass die Überholassistenzfunktion nach ihrer Aktivierung durch den Fahrer eine fahrerunabhängige Beschleunigung des Kraftfahrzeugs während eines Zeitintervalls vorgegebener Länge durchführt.

Eine vorteilhafte Ausgestaltung der Erfindung ist dadurch gekennzeichnet,
- dass die Abstands- und/oder Geschwindigkeitsregelungsfunktion auf einer Umfeldsensorik basiert,
- dass mittels der Umfeldsensorik ermittelt wird, ob sich das Kraftfahrzeug auf einer ein- oder mehrspurigen Fahrbahn befindet und
- im Fall des Vorliegens einer einspurigen Fahrbahn die Überholassistenzfunktion nicht aktivierbar ist.

Eine vorteilhafte Ausgestaltung der Erfindung ist dadurch gekennzeichnet, dass das Zeitintervall vorgegebener Länge einen Wert zwischen 1 Sekunde und 2 Sekunden hat.

Eine vorteilhafte Ausgestaltung der Erfindung ist dadurch gekennzeichnet, dass es sich bei dem einspurigen Kraftfahrzeug um ein Motorrad handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

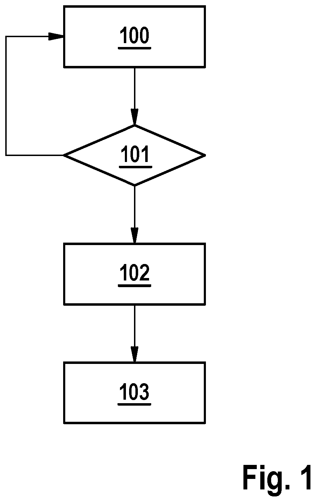

Die Zeichnung umfasst Figur 1.

In Fig. 1 ist der grundlegende Ablauf einer Ausgestaltung des erfindungsgemäßen Verfahrens dargestellt.

Eine Überholassistenzfunktion ist hauptsächlich für den Einsatz auf mehrspurigen Straßen vorgesehen. Dazu führt diese Funktion eine fahrerunabhängige Beschleunigung des Kraftfahrzeugs durch, so dass ein für den Fahrer komfortabler Überholvorgang ermöglicht wird. Während des Überholvorgangs kann sich der Fahrer dadurch besser auf die Überwachung der aktuellen Verkehrssituation konzentrieren.

Die Überholassistenzfunktion ist häufig Bestandteil bzw. Unterfunktion einer Abstands- und/oder Geschwindigkeitsregelungsfunktion. Eine Abstands- und/oder Geschwindigkeitsregelungsfunktion erfasst mittels einer geeigneten Umfeldsensorik, z.B. Radar- oder Videosensorik, den vor dem Fahrzeug liegenden Bereich und stellt dadurch sicher, dass sich das eigene Fahrzeug nicht zu stark oder zu schnell einem mittels der Umfeldsensorik detektierten vorausfahrenden Fahrzeug annähert.

Setzt der der Fahrer auf einer mehrspurigen Fahrbahn zu einem Überholvorgang von einem auf derselben Fahrspur vorausfahrenden Fahrzeug an und aktiviert eine Überholassistenzfunktion, dann kann eine Situation auftreten, in welcher die angeforderte Beschleunigung im Widerspruch zu den Abstands- und/oder Annäherungsgeschwindigkeitserfordernissen der Abstands- und/oder Geschwindigkeitsregelungsfunktion steht. Diese unterdrückt dann die fahrerunabhängige Beschleunigung solange, bis das vorausfahrende Fahrzeug weit genug entfernt vom eigenen Fahrzeug ist.

In diesem Fall würde der Fahrer beim Einleiten des Überholvorgangs dann ohne Unterstützung durch die angeforderte Beschleunigung auf die benachbarte Fahrspur wechseln und die angeforderte fahrerunabhängige Beschleunigung würde sich erst nach Erreichen der neuen Fahrspur einstellen. Dieses Verhalten würde sich für den Fahrer sehr unnatürlich anfühlen.

Eine solche Situation kann verhindert werden, wenn während der Beschleunigungsphase der Überholassistenzfunktion Eingriffe der Abstands- und/oder Geschwindigkeitsregelungsfunktion unterdrückt werden.

Neben einer vollständigen Unterdrückung der Eingriffe der Abstands- und/oder Geschwindigkeitsregelungsfunktion ist es auch denkbar, deren Eingriffe nur dann zuzulassen, wenn eine unmittelbare Kollisionsgefahr mit dem vorausfahrenden Fahrzeug droht.

Die Sicherheit der Überholassistenzfunktion kann weiter erhöht werden, wenn z.B. mittels der Umfeldsensorik ermittelt wird, ob sich das Fahrzeug auf einer ein- oder mehrspurigen Straße bzw. Fahrbahn befindet. Beim Vorliegen einer einspurigen Fahrbahn ist es auch denkbar, die Aktivierung der Überholassistenzfunktion zu unterbinden.

Der grundlegende Ablauf einer Ausgestaltung des erfindungsgemäßen Verfahrens ist in Fig. 1 dargestellt. Nach dem Start in Block 100 wird ermittelt, ob die Betätigungsdauer eines Bedienelements zur Aktivierung einer Überholassistenzfunktion einen vorgegebenen Schwellenwert überschreitet. Ist das nicht der Fall, dann wird zu Block 100 zurückgekehrt. Wird der Schwellenwert überschritten, dann werden anschließend in Block 102 Eingriffe einer Abstands- und/oder Geschwindigkeitsregelungsfunktion während der fahrerunabhängigen Beschleunigungsphase der Überholassistenzfunktion vorübergehend unterdrückt.

## Patentansprüche

1. Verfahren zur Aktivierung einer Überholassistenzfunktion eines einspurigen Kraftfahrzeugs mittels eines durch den Fahrer betätigbaren Bedienelements eines Fahrtrichtungsanzeigers, wobei das einspurige Kraftfahrzeug zusätzlich eine Abstands- und/oder Geschwindigkeitsregelungsfunktion aufweist, **dadurch gekennzeichnet, dass**
- die Betätigungsdauer des Bedienelements ermittelt wird und
- für den Fall, dass die Betätigungsdauer einen vorgegebenen Schwellenwert überschreitet (101), Eingriffe der Abstands- und/oder Geschwindigkeitsregelungsfunktion während der fahrerunabhängigen Beschleunigungsphase der Überholassistenzfunktion vorübergehend unterdrückt werden (102).

2. Verfahren nach Anspruch 1, **dadurch gekennzeichnet, dass** es sich bei dem Bedienelement um einen Blinkerhebel handelt.

3. Verfahren nach Anspruch 1, **dadurch gekennzeichnet, dass** die Überholassistenzfunktion nach ihrer Aktivierung durch den Fahrer eine fahrerunabhängige Beschleunigung des Kraftfahrzeugs während eines Zeitintervalls vorgegebener Länge durchführt.

4. Verfahren nach Anspruch 1, **dadurch gekennzeichnet,**
- **dass** die Abstands- und/oder Geschwindigkeitsregelungsfunktion auf einer Umfeldsensorik basiert,
- **dass** mittels der Umfeldsensorik ermittelt wird, ob sich das Kraftfahrzeug auf einer ein- oder mehrspurigen Fahrbahn befindet und
- im Fall des Vorliegens einer einspurigen Fahrbahn die Überholassistenzfunktion nicht aktivierbar ist.

5. Verfahren nach Anspruch 1, **dadurch gekennzeichnet, dass** das Zeitintervall vorgegebener Länge einen Wert zwischen 1 Sekunde und 2 Sekunden hat.

6. Verfahren nach Anspruch 1, **dadurch gekennzeichnet, dass** es sich bei dem einspurigen Kraftfahrzeug um ein Motorrad handelt.

7. Vorrichtung, zur Aktivierung einer Überholassistenzfunktion eines einspurigen Kraftfahrzeugs mit einem durch den Fahrer betätigbaren Bedienelement eines Fahrtrichtungsanzeigers, wobei das einspurige Kraftfahrzeug zusätzlich eine Abstands- und/oder Geschwindigkeitsregelungsfunktion aufweist, wobei die Vorrichtung ein Steuergerät aufweist, das eingerichtet ist,
- die Betätigungsdauer des Bedienelements zu ermitteln und
- für den Fall, dass die Betätigungsdauer einen vorgegebenen Schwellenwert überschreitet (101), Eingriffe der Abstands- und/oder Geschwindigkeitsregelungsfunktion während der fahrerunabhängigen Beschleunigungsphase der Überholassistenzfunktion vorübergehend zu unterdrücken (102).

## Claims

1. Method for activating an overtaking assistance function of a single-track motor vehicle by means of a rider-actuatable operating element of a direction indicator, the single-track motor vehicle additionally having a distance and/or speed control function, **characterized in that**
- the actuating time of the operating element is determined and
- in the event that the actuating time exceeds a specified threshold value (101), interventions by the distance and/or speed control function are temporarily suppressed during the rider-independent acceleration phase of the overtaking assistance function (102).

2. Method according to Claim 1, **characterized in that** the operating element is a turning signal lever.

3. Method according to Claim 1, **characterized in that**, once activated by the rider, the overtaking assistance function performs a rider-independent acceleration of the motor vehicle for a time interval of a specified length.

4. Method according to Claim 1, **characterized**
- **in that** the distance and/or speed control function is based on an environment sensor system,
- **in that** it is determined by the environment sensor system whether the motor vehicle is located on a single-lane or multi-lane roadway and
- in the case of a single-lane roadway, the overtaking assistance function is not activatable.

5. Method according to Claim 1, **characterized in that** the time interval of a specified length has a value of between 1 second and 2 seconds.

6. Method according to Claim 1, **characterized in that** the single-track motor vehicle is a motorcycle.

7. Device for activating an overtaking assistance function of a single-track motor vehicle with a rider-actuatable operating element of a direction indicator, the single-track motor vehicle additionally having a distance and/or speed control function, wherein the device has a controller which is configured
- to determine the actuating time of the operating element and
- in the event that the actuating time exceeds a specified threshold value (101), to temporarily suppress interventions by the distance and/or speed control function during the rider-independent acceleration phase of the overtaking assistance function (102).

## Revendications

1. Procédé pour activer une fonction d'assistance au dépassement d'un véhicule automobile à voie unique au moyen d'un élément de commande d'un indicateur de direction apte à être actionné par le conducteur, le véhicule automobile à voie unique présentant en outre une fonction de régulation de la distance et/ou de la vitesse, **caractérisé en ce que**
- la durée d'actionnement de l'élément de commande est déterminée, et
- dans le cas où la durée d'actionnement dépasse une valeur seuil prédéfinie (101), les interventions de la fonction de régulation de la distance et/ou de la vitesse sont temporairement supprimées (102) pendant la phase d'accélération de la fonction d'assistance au dépassement indépendante du conducteur.

2. Procédé selon la revendication 1, **caractérisé en ce que** l'élément de commande est le levier de clignotant.

3. Procédé selon la revendication 1, **caractérisé en ce que** la fonction d'assistance au dépassement, après avoir été activée par le conducteur, accélère le véhicule pendant un intervalle de temps d'une durée prédéfinie, indépendamment du conducteur.

4. Procédé selon la revendication 1, **caractérisé**
- **en ce que** la fonction de régulation de la distance et/ou de la vitesse est basée sur un capteur d'environnement,
- **en ce que** le capteur d'environnement détermine si le véhicule se trouve sur une chaussée à voie unique ou plusieurs voies, et
- **en ce que** la fonction d'assistance au dépassement ne peut pas être activée sur une chaussée à une seule voie.

5. Procédé selon la revendication 1, **caractérisé en ce que** l'intervalle de temps de longueur prédéfinie a une valeur comprise entre 1 seconde et 2 secondes.

6. Procédé selon la revendication 1, **caractérisé en ce que** le véhicule à voie unique est une moto.

7. Dispositif pour activer une fonction d'assistance au dépassement d'un véhicule à voie unique, comprenant un élément de commande d'un indicateur de direction apte à être actionné par le conducteur, le véhicule à voie unique présentant en outre une fonction de régulation de la distance et/ou de la vitesse, le dispositif comprenant un appareil de commande qui est conçu de façon à
- déterminer la durée d'actionnement de l'élément de commande, et
- dans le cas où la durée d'actionnement dépasse une valeur seuil prédéfinie (101), supprimer temporairement (102) les interventions de la fonction de régulation de la distance et/ou de la vitesse de la fonction d'assistance au dépassement, pendant la phase d'accélération indépendante du conducteur.
